Europäisches Patentamt

European Patent Office

Office européen des brevets

(19)

(11) Publication number: 0 264 676
A1

(12) **EUROPEAN PATENT APPLICATION**

(21) Application number: 87114266.7

(22) Date of filing: 30.09.87

(51) Int. Cl.⁴: **D21H 1/02** , **B32B 29/00** , **B31F 1/00** , **A47K 10/16**

(30) Priority: 10.10.86 IT 1255586

(43) Date of publication of application:
27.04.88 Bulletin 88/17

(84) Designated Contracting States:
AT BE CH DE ES FR GB GR IT LI LU NL SE

(71) Applicant: MIRA LANZA S.p.a.
Via Rivarolo 14
I-16161 Genova(IT)

(72) Inventor: Nistri, Ugo
4, Via Coriolano Bozzo
I-16030 Pieve Ligure(IT)
Inventor: Bertini, Adriano
28/4 Corso Firenze
I-16136 Genova(IT)
Inventor: Greppi, Giacomo
62/1 Via Molassana
I-16138 Genova(IT)

(74) Representative: Porsia, Attilio et al
c/o Succ. Ing. Fischetti & Weber-Dr. Porsia
Via Caffaro 3/2
I-16124 Genova(IT)

(54) Process for the manufacture of multi-ply absorbent paper sheets, and composite paper sheet products thus obtained.

(57) Three layers of cellulose material unwound from three respective rolls (1, 2, 3) are associated firmly with each other in a continuous process, and the composite sheet (15) thus obtained is wound up again. Each layer has complementary characteristics whereby the final product (15) thus obtained can afford specific usages other than those of the individual layers. More particularly, the two outer layers have a surface-finish granting smoothness and softness to the final product (15), while the inner layer has characteristics of resiliency, mechanical strength, high liquid-absorbency and pre-established elasticity or compressibility performances.

For manufacturing the composite product (15), use can be made of cellulose layers of different origins and types, such as paper manufactured by the conventional wet process or paper manufactured by any dry-forming process, or a combination of types of paper produced by different processes.

One or more layers may be submitted to any mechanical treatment (7, 8, 9) prior to said association in order to enhance the formation of pervious cells within the final composite sheet (15), whereby to create a "sponge-like" absorbing effect.

## Process for the manufacture of multi-ply absorbent paper sheets, and composite paper sheet products thus obtained

Specification

This invention relates to a process for the continuous manufacture of absorbent paper sheets of the single-use or the limited-reuse type, formed by two external or outer layers and one or more intermediate or inner layers of cellulosic material.

In the field of absorbent paper for either household and industrial use, called single-use or disposable paper, and in the field of limited reuse paper products, called semi-durable products, the user requires features and performances that can hardly be combined with each other and with the resistance to liquids, such as, for example, strength and softness; high liquid absorption capability; mechanical resistance in the wet condition; depressability; and so on. These features can hardly be obtained in the same production step without resorting to complicated procedures the costs of which are commercially uneconomical.

One of the most difficult problems is to manufacture very smooth absorbent products having good mechanical strength.

The conventional most widespread system to enhance softness without compromising strength too much is to either emboss, calender or crinkle the cellulose web by means of a wrinkling device.

These mechanical processes break many inter-fibre bonds. However, though the broken inter-fibre bonds in a formed web produce some smoothness (especially at the surface of a web due to the loose ends of the fibres), this procedure scarcely contributes to increase the volume, fluff and flexibility of the product, i.e. to decrease its density. Moreover, crinkling is not actually a simple process, and beyond certain limits, it may increase the surface roughness, thus giving the paper sheet thus processed an unpleasant feeling to the touch, which is detrimental to softness.

Further systems which have been used to enhance softness consist of the application of chemical additives to the formed paper sheet, by means of spraying or dipping methods.

As an alternative, it has been suggested to introduce said chemical additives directly into the cellulose pulp mix, or to use cellulose materials which have been obtained by the sulphite process and which, as is known, give the paper a higher softness with respect to the paper made of cellulose resulting from the sulphate process, however with a decrease in the strength of the final product.

According to a further known process of through-drying manufacture of paper, in order to obtain a soft paper product, a wet layer of fibres is pre-dried without compressing the fibres excessively as in conventional processes, and is then dried and crinkled. By so doing, the fibres are compacted to a lesser extent and, therefore, a softer material is obtained.

A further known system to enhance the softness of the paper webs in the wet process consists of the introduction of particular debonder surfactants into the cellulose pulp mix.

A multiple layer formation system is also known wherein, in the formation step, the cellulose layer is built up with two or more layers of fibers having different characteristics (length and type), with particular provisions whereby, for example, the shorter fibres are arranged exteriorly to grant "softness", and the longer fibres are arranged interiorly to grant strength to the assembly.

All these systems imply extensive modifications in the conventional production processes, with attendant increase in costs, and anyway they yield products which are the result of a compromise as to the desired characteristics.

For example, in the through-drying process with debonders, the products tend to show low strength; in the multi-layer processes a neat separation between the two types of fibres cannot actually be obtained.

As to the purely mechanical processes, such as the association of three webs, either with or without embossing, the results which are obtained are decidedly scarce.

So for instance, in order to enhance the mechanical resistance in the wet condition of a paper by a purely mechanical process it is necessary to add to its composition an increased amount of polymers which are apt to confere said properties, but the addition of said increased amounts of such products automatically decreases the absorption capacity and the softness of the thus obtained paper product.

Therefore, the main object of the present invention is to provide a process for the continuous manufacture of composite paper sheets of the single-use or limited-reuse type, comprising two outer layers of high surface finish and at least one inner layer having high absorbency and/or mechanical strenght, without resorting to substantial plant modifications of the existing processes for the wet type and/or dry type manufacture of paper, preserving the peculiar characteristics of each layer so as meet the requirements of the users.

A further object of the present invention is to provide an absorbent cellulose product in the form of a multiple-layer or multiple-ply sheet by the process of the present invention, each layer having characteristics which can hardly be combined with those of the adjacent layer.

According to a characteristic of the process of the present invention, the process comprises the steps of simultaneously feeding from an unrolling station at least three continuous webs of paper having different characteristics; subjecting at least one of said webs to a mechanical treatment such as for instance embossing, wrinkling o corrugation whereby to produce within the final multi-ply sheet product perviuous cells; assembling said three webs at an assembling station through the application of adhesive to the opposite surfaces of the webs being fed; and feeding the composite multiple-layer or multiple-ply sheets thus obtained to a final re-winding station.

According to the invention, the said sheet or sheets may be subjected to the said mechanical treatment either before being delivered at said unrolling station, or during their movement from the unrolling station to the said adhesive-applying station.

The paper being utilized may be a wet-formed, pure-cellulose paper with either short or long fibres, optionally submitted to surface-finish procedures, or pure-cellulose dry-formed paper, dry-formed paper comprising pure-cellulose or other fibres or super-absorbent polymers, or low-cost, wet-formed paper variable contecnts of wood pulp and regenerated paper, and so on.

According to a further characteristic of the present invention, advantageously, these types of paper may be previously submitted to calendering, embossing, wrinkling, printing, corrugating or similar mechanical treatment intended to additionally confere particular characteristics of softness, strength, stiffness, absorption, volume, appearance, etc. to one or more layers.

The invention will be better undersood from the following description of some examples thereof, given by way of illustration and not of limitation thereof, in which reference is made to the accompanying drawings, in which:

Figure 1 diagrammatically shows a plant for the production of a three-layers sheet product according to a first embodiment of the invention, and

Figure 2 is a diagrammatical sectional view, in enlarged scale, through a three-layers sheet product obtained with the plant of Figure 1.

Figure 3 is a diagrammatically view of a plant similar to that of Figure 1, for the production of a four-layers sheet product according to another embodiment of the invention.

Figure 4 is a sectional view, corresponding to the view of Figure 2, through a four-layers sheet product obtained with the plant of Figure 3.

EXAMPLE 1.

Production of a composite, three-ply, sandwich-type sheet whose outer webs are formed of extremely white paper previously submitted to a wrinkling and calendering step to be granted a highly attracting appearance and handling features, and whose inner web is made of a wet-formed paper having high strength.

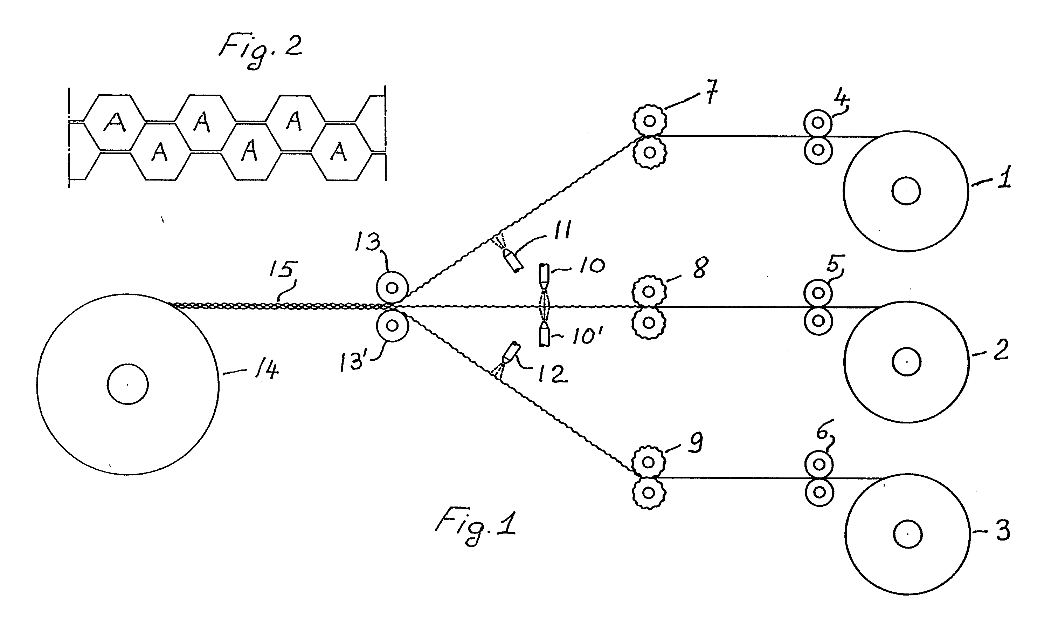

The production process described above is carried out in the plant shown in Figure 1. This plant comprises a paper feeding station at which the two outer paper webs are unwound, through driven roller pairs 4 and 6, from rolls 1 and 3, and the intermediate paper web is unwound from roll 2 by means of the roller pairs 5. An embossing or corrugating station comprising three embossing roller pairs 7, 8 and 9, is provided downstream of the roller pairs 4, 5 and 6, where the three continuous paper webs from rolls 1, 2 and 3 are embossed. The thus embossed paper webs are thereafter delivered to an adhesive applying station comprising the adhesive applying nozzles 10, 10', 11 and 12, where an adhesive is applied on the two faces of the inner web and on the inner sides of the two outer webs. The glued webs are thereafter delivered to an assembling station comprising two cooperating rollers 13, 13' where the three continuous webs are assembled or associated together, and are finally delivered to a winding station 14 where the composite sheet 15 thus obtained is wound up again.

The characteristics of the webs being fed are as follows:

Outer webs:

Type: calendered, wet-formed paper.
Material: cellulose mix with long and short fibres.
Degree of white: 84
Substance: 14 gr/m2

Inner web:

Type: wet-formed paper.
Material: long-fibre cellulose and wood pulp.
Substance: 18 gr/m2
Degree of white: 75

Adhesive utilized: cellulose ethers.

The main characteristics of the resulting composite sheet are:
-Longitudinal ultimate tensile strength (test piece, 15mm): 600 g.
-Degree of white: 84.
-Depressability and feeling to touch, decidedly superior to those of the three webs of the individual materials.

It is apparent that the final product has a highly attracting appearance and high characteristics of strength, absorption and depressability.

A particular function in this achievement is fulfilled by the cavities marked A in Figure 2 which are created between the outer layers and the inner layer, giving the final composite product, together with the desired resilience, a high capability of absorbing and retaining liquids.

EXAMPLE 2.

Production of a composite, three-ply, sandwich type sheet whose outer webs are formed of wet-formed, extremely white paper, one face of which (the face exposed to the view in the composite sheet) is provided previously with printed characters and decorations, and whose inner web is constituted of a dry-formed paper which has been embossed and has good strength when wet and has good absorption capability.

The characteristics of the webs being fed are as follows:

Outer webs: Type: wet-formed paper.
-Material: cellulose mix with long and short fibres.
-Substance: 14 gr/m2.

Inner web: Type: dry-formed paper.
-Material: cellulose with long fibres and synthetic polymers.
-Substance: 35 gr/m2.

Adhesive utilized: vinylic.

The production process is carried out in an assembling plant of the same type as that of the EXAMPLE 1. The speed of feed of the three webs or sheet-forming layers was 500 m/h.

The main characteristics of the resulting composite sheet are:
-water absorption capability: 350 g/m2
-longitudinal ultimate tensile strength: 1000 g
-depressability and feeling to touch, decidedly superior to those of the three webs of the individual materials.

Again, the small cells resulting from the embossing, together with inherent absorption characteristics of the web constituting the inner layer, fulfil a sponge-like function for absorbing and retaining liquids, while the outer webs fulfil an aesthetic function (due also to decorative prints) and a containment function.

EXAMPLE 3.

Production of a composite, three-ply, sandwich type sheet whose outer webs are constituted by wet-formed, extremely white paper of such a thickness as to be responsive to the "roughness" characteristics of the intermediate layer, and whose intermediate layer is constituted by wet-formed paper having a lower aesthetic value and a good strength, submitted previously to a particular embossing giving the two faces of said inner layer two different surface conditions, one of the surfaces being "rougher" and the other being "smoother".

The process is performed by using a plant according to Figure 1. However, the embossig step is omitted, since a previously embossed intermediate layer is used.

The characteristics of the webs being fed are as follows:

Outer webs: Type: calendered wet-formed paper.
-Material: cellulose mix with short and long fibres.
-Substance: 14 gr/m2.

Inner web: Type: embossed wet-formed paper.
-Material: long-fibre cellulose and semi-chemical pulp.
-Substance: 18 gr/m2.
-Embossing: ridges and depressions.

Adhesive used: cellulose ethers.

The main characteristics of the resulting composite sheet are:
-water absorption capability: 250 g/m2
-longitudinal ultimate tensile strength (test piece, 15 mm): 800 g
-Feel to touch: upper side: smooth
    lower side: slightly rough

By virtue of the particular configuration of the inner layer, the composite sheet performs a good sponge-like function, and by virtue of the embossing of the inner layer, which is transferred to the exterior thorough the thinner outer layers, it presents two outer faces having different "roughness" levels so as to afford an alternative selection of use.

EXAMPLE 4

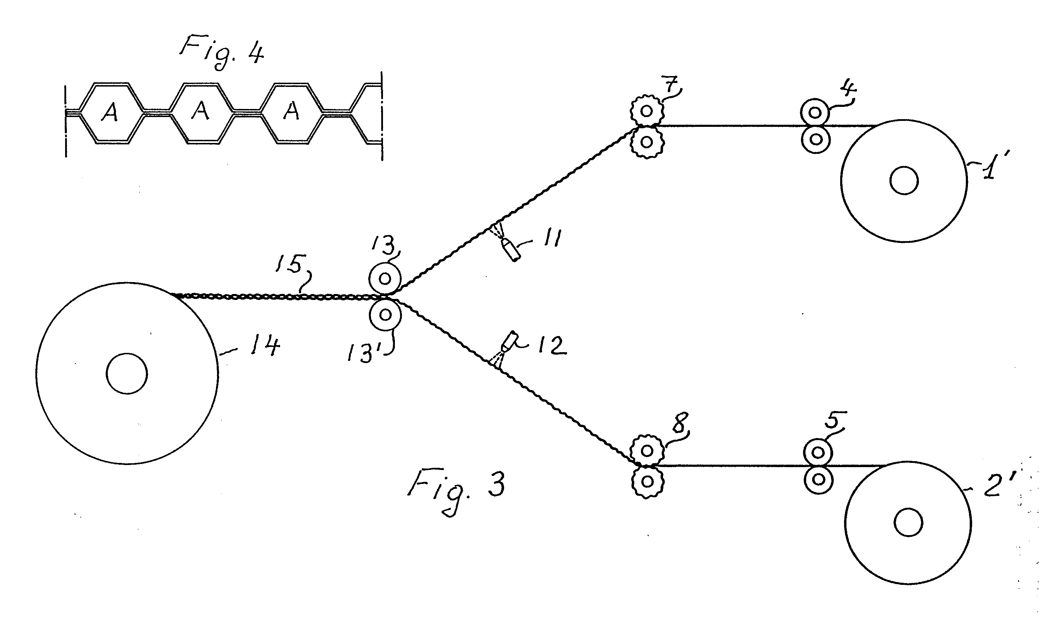

Production of a composite four-ply sheet in which the two outer webs are formed by a highly finished white paper. The process is perfomed in a plant of the kind shown in Figure 3, which substantially correspond to the plant of Figure 1, with the exception that it is equiped with only two bobins 1', 2' each containing a two-ply web of paper.

A composite four-ply sheet is formed having substantially a cross sectional structure as shown in Figure 4.

EXAMPLE 5

The same process as described in Example 4 is perforemed, in the same plant shown in Figure 3, with the difference that bobin 1' contains a single-ply web, and bobin 2' contains a two-ply web.

## Claims

1. A process for the continuous manufacture of absorbent paper sheets of the single-use or limited-reuse type including two outer layers, and at least one intermediate layer, comprising the steps of subjecting at least one of the said paper sheets to a mechanical treatment like embossing, corrugating or wrinkling; assembling said sheets with each other at an assembling station by the application of adhesives and/or by the use of mechanical provisions; and feeding the composite multiple-ply sheet thus obtained to a final re-winding station.

2. The process according to claim 1, in which the two outer layers have a high surface-finish and the inner layer or layers have a high assorbency for liquids and/or a high mechanical resistance.

3. A process according to claim 1, wherein along the path of travel of said sheets between the unwinding station and the assembling station, means is provided to subject one or more of said sheets to a suitable mechanical treatment.

4. A process according to the preceding claims, wherein the webs or layers of said composite sheet are webs of paper obtained by wet-forming methods, or webs of paper obtained by dry-forming methods, or a part of said webs is constituted by paper obtained by dry-forming methods and a part by paper obtained by wet-forming methods.

5. A composite sheet of paper obtained with the process according to the preceding claims, comprising two outer layers of high surface finish, and at least one inner layer having high characteristics of absorbency and strength.

6. A composite sheet according to claim 5, characterized in that said inner and/or said outer layers are submitted, prior to their assembling, to a mechanical treatment such as embossing, wrinkling or corrugation, whereby to produce within the final composite sheet pervious cells promoting a "sponge-like" absorption effect.

7. A composite sheet according to claim 6, characterized in that the outer layers have such thickness and plasticity characteristics as to transfer the characteristics of said mechanical treatment of the inner layer to the outer side of the composite sheet, so as to give the two outer faces different feelings to the touch.

Fig. 2

Fig. 1

0 264 676

Fig. 4

A   A   A

Fig. 3

15

14

13

13'

11

12

7

4

1'

8

5

2'

0 264 676

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-3 650 882 (G.D. THOMAS)<br>* Whole document *<br>--- | 1,3,4,6 | D 21 H 1/02<br>B 32 B 29/00<br>B 31 F 1/00<br>A 47 K 10/16 |
| X | US-A-3 738 905 (G.D. THOMAS)<br>* Figures 8-11,14,15; column 1; column 2, lines 1-55; column 4, line 16 – column 5, line 52; examples 2,4,6; columns 8,9 *<br>--- | 1,3,4,6 | |
| A | US-A-3 215 589 (H.H. HELLER et al.)<br>* Whole document *<br>----- | 2,4,5 | |

TECHNICAL FIELDS SEARCHED (Int. Cl.4)

A 47 K
D 21 H

The present search report has been drawn up for all claims

| Place of search | Date of completion of the search | Examiner |
|---|---|---|
| THE HAGUE | 08-01-1988 | NESTBY K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)